# EUROPEAN PATENT SPECIFICATION

(11) **EP 0 673 110 B1**
(45) Date of publication and mention of the grant of the patent: **28.10.1998**
(21) Application number: 95103698.7
(22) Date of filing: 14.03.1995
(51) Int. Cl.: H02P 21/00

(54) **Variable speed control apparatus for induction motor**
Apparat zur Steuerung eines Induktionsmotor mit veränderlicher Geschwindigkeit
Appareil de commande à vitesse variable d'un moteur à induction

(30) Priority: 18.03.1994 JP 74401/94
(43) Date of publication of application: 20.09.1995
(73) Proprietor: FUJI ELECTRIC CO. LTD., Kawasaki 210 (JP)
(72) Inventor: Tajima, Kouichi, Kawasaki-ku, Kawasaki 210 (JP); Umida, Hidetoshi, Kawasaki-ku, Kawasaki 210 (JP)
(74) Representative: Hoffmann, Eckart, Dipl.-Ing.

(56) References cited:
- EP-A- 0 105 511
- PATENT ABSTRACTS OF JAPAN vol. 013 no. 184 (E-751), 28 April 1989 & JP-A-01 008896 (FUJI ELECTRIC CO LTD) 12 January 1989

## Description

The present invention relates to a variable speed control apparatus which controls a motor by the transvector control method without using a speed sensor.

Transvector control systems, which control a motor, without using a speed sensor, by operating a primary angular frequency for detecting a position of a magnetic flux axis based on an induced voltage of the motor, are disclosed in JP-A-64-8896 and JP-A-01-198292, the latter document disclosing an apparatus according to the pre-characterizing portion of claim 1.

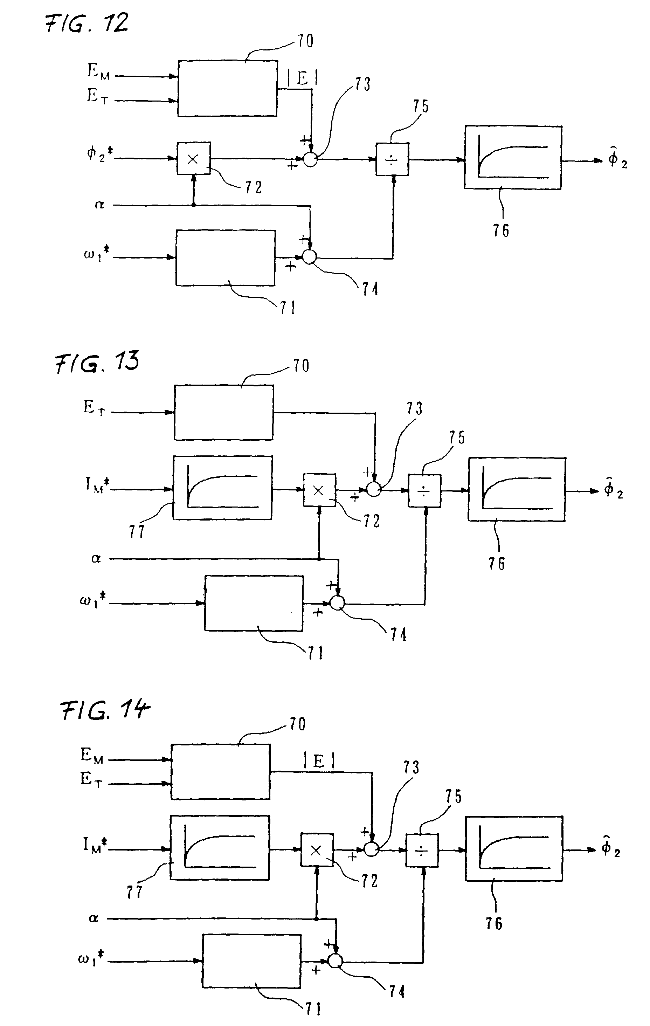

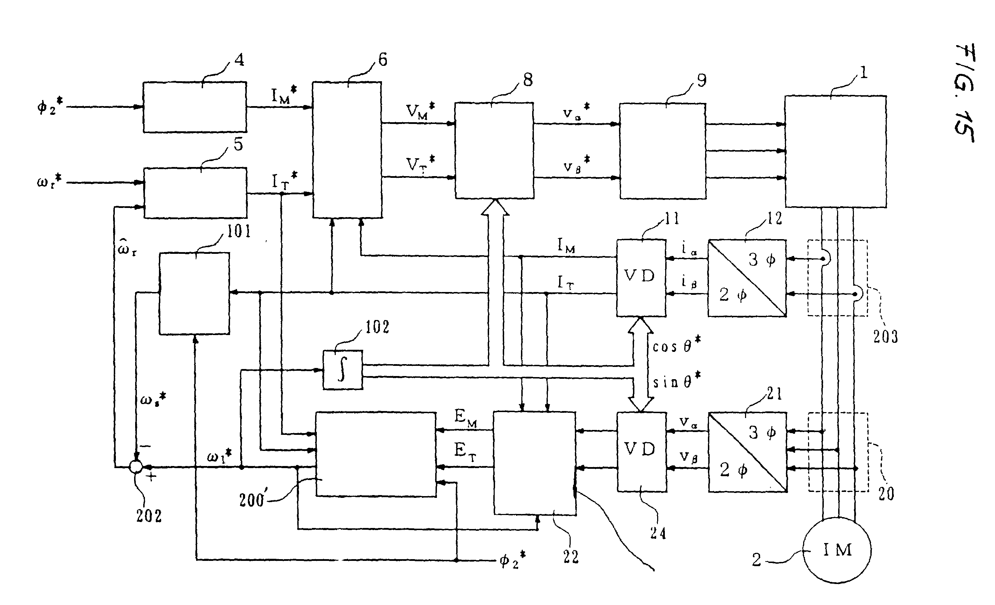

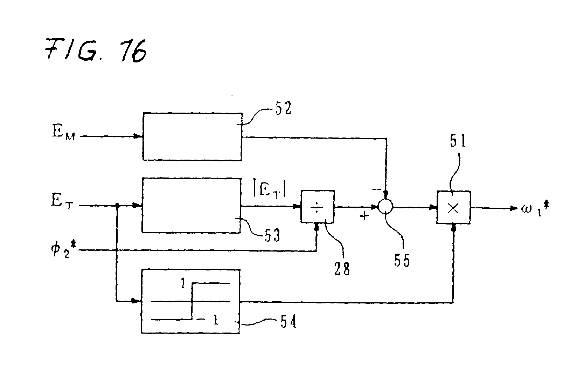

Fig. 15 is a block diagram of a variable speed control apparatus almost similar to the variable speed control apparatuses described in the above mentioned documents. Fig. 16 is a block circuit diagram showing a primary angular frequency operating means 200' of Fig. 15.

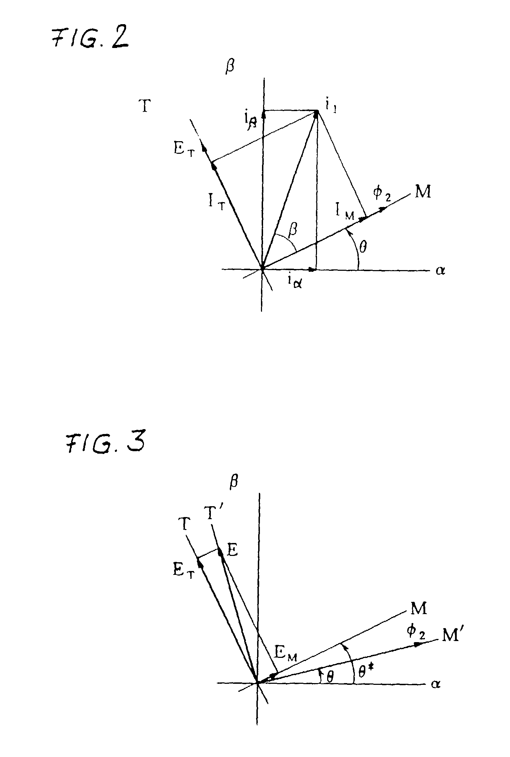

A vector diagram of an induced voltage is shown in Fig. 3 and will be explained later.

Here, the operation of the primary angular frequency operating means 200' according to the prior art is briefly explained. In Fig. 16, an absolute value operating circuit 53 calculates the absolute value | E_{T} | of a T axis component E_{T} (T axis induced voltage) of an induced voltage vector E. Here, an M axis is an axis of a rotational coordinate system lying in a direction of magnetic flux, and the T axis is an axis perpendicular to the M axis. The absolute value | E_{T} | is fed to a divider 28. The divider 28 calculates a primary angular frequency by dividing the absolute value | E_{T} | by a magnetic flux command value φ₂*.

As Fig. 3 indicates, an M axis component E_{M} (M axis induced voltage) of the induced voltage vector E has a non-zero value when a phase angle command value θ*, obtained from an integrator 102 of Fig. 15, deviates from an actual phase angle value θ of a motor. To avoid this, the primary angular frequency operating means 200' conducts a control operation which always controls E_{M} at zero by inputting E_{M} to a regulating means 52, and subtracting in the adder 55 the output of the regulating means 52 from the output of the divider 28.

By this control operation, the absolute value of a primary angular frequency | ω₁* | is corrected so that the phase angle command value θ* may coincide with the actual phase angle value e. A P controller which conducts proportional operation or Pl controller which conducts proportional plus integral operation is used for the regulating means 52.

The derivation of the primary angular frequency command value ω₁ * is completed by detecting the sign of E_{T} in a polarity detecting circuit 54, and adding the detected sign to | ω₁ * | in a multiplier 51.

The thus obtained ω₁ * is converted, in integrator 102 of Fig. 15 as a magnetic flux position operating means, to the phase angle command value θ*, which is used for voltage and current vector rotating operations in vector rotators 11 and 24, and in a coordinate transformer 8. An adder 202 calculates an estimated speed value ωᵣ by subtracting from ω₁ * a slip frequency command value ω_{S}* calculated in a slip frequency operator 101. (Though a ^ symbol is added to estimated values throughout the drawing figures, this symbol is omitted in the specification.) The estimated speed value ωᵣ is used for speed control of an induction motor 2.

In Fig. 15, a primary current of the induction motor 2 is detected by a current detector 203, and resolved in a three-pase/two-phase transformer 12 into two-phase values i_{α}, i_{β}. which are further transformed in vector rotator 11 to an actual magnetizing current value l_{M} and an actual torque current value I_{T} on the above described rotational coordinate system (M-T coordinates) defined with respect to the axis of magnetic flux.

A magnetic flux regulator 4 generates a magnetizing current command value l_{M}* based on the magnetic flux command value φ₂*, and a speed regulator 5 generates a torque current command value I_{T}* from a speed command value ωᵣ* and the estimated speed value ωᵣ.

A current regulator 6 obtains an M component V_{M}* (magnetizing voltage command value) and a T component V_{T}* (torque voltage command value) of a primary voltage command value from the command values l_{M}*, l_{T}* and the actual values l_{M}, l_{T}.

The voltage command values V_{M}*, V_{T}* are transformed though a coordinate transforming circuit 8 to two-phase values V_{α}*, V_{β}* which are further converted in a pulse generating circuit 9 to drive pulses for driving a PWM inverter 1.

A voltage detector 20, a three-pase/two-phase transformer 21, the vector rotator 24 and induced voltage operating circuit 22 are used for detecting the induced voltage vector E of the induction motor 2, and for obtaining its components E_{M}, E_{T}.

EP-A-0 105 511 discloses a control method for induction motors wherein the primary frequency is controlled so that M axis component E_{M} (referred to as d-axis component e_{d} in the document) is kept at zero. There is no disclosure about control in the field-weakening region in this document.

In the prior art described above, the output of the regulating means 52, which conducts proportional or proportional plus integral operation for regulating the M axis induced voltage E_{M} at zero, is directly added to the absolute value of the primary angular frequency | ω₁ * |.

Because of this, the proportional gain of the regulating means 52 becomes too large relative to the intensity of the magnetic flux in a field-weakening region in which the magnetic flux intensity of the induction motor 2 is weakened. This relatively too large proportional gain of the regulating means 52 affects the primary angular frequency command value ω₁ *, and is hazardous for a stable and smooth drive of the induction motor 2.

Since the induced voltage becomes small in a low speed driving range, decrease of an S/N ratio of the detected voltage signal and significant digits of the detected data causes a large operational error of the primary angular frequency command value obtained by dividing the T axis induced voltage value E_{T} by the magnetic flux intensity.

Since the magnetic flux command value φ₂* is used as an equivalent of the magnetic flux intensity in the above described dividing, an error is caused in the primary angular frequency command value ω₁ * when the command value φ₂* deviates from the actual value of the magnetic flux which may vary greatly depending on the driving condition of the induction motor.

In view of the foregoing, a first object of the present invention is to provide a variable speed control apparatus for an induction motor which facilitates driving the induction motor stably and smoothly even in the field weakening range. A second object of the present invention is to provide a variable speed control apparatus for an induction motor which reduces the operational error of the primary angular frequency command value in a low speed driving range. And, a third object of the present invention is to provide a variable speed control apparatus for an induction motor which reduces the operational error of a magnetic flux equivalent which is necessary for calculating the primary angular frequency command value from the induced voltage.

These objects are achieved with an apparatus as claimed in Claim 1.

In a variable speed control apparatus for an induction motor according to the present invention, the primary angular frequency operating means is provided with a multiplier which multiplies the output of the first regulating means by a variable which varies in response to the magnetic flux intensity. This first regulating means regulates the M axis induced voltage at zero. The primary angular frequency operating means corrects the primary angular frequency command value by the output of the multiplier.

The primary angular frequency operating means is preferably provided with an adder which adds the output of second regulating means and the output of the primary angular frequency operating means described above. The second regulating means regulates (by proportional or proportional plus integral operation) the deviation between the command value of the torque current or the torque and an actual value to zero.

A variable speed control apparatus for an induction motor is preferably provided with a magnetic flux operating means which calculates first and second values. The first value is obtained by adding the result of multiplication of a reference frequency value by the magnetic flux command value and the absolute value of the induced voltage or the T axis induced voltage. The second value is obtained by adding the reference frequency value and the absolute value of the primary angular frequency command value. The magnetic flux operating means divides the first value by the second value and obtains a calculated magnetic flux value by filtering the result of the division through a low path filter. The calculated magnetic flux value is used as a magnetic flux equivalent necessary for the input of the primary angular frequency operating means and the magnetic flux regulator.

The relation among the M axis induced voltage E_{M}, the T axis induced voltage E_{T}, the primary angular frequency ω₁ and the secondary magnetic flux φ₂ is expressed by equation 1. In equation 1, sgn(E_{T}) indicates the polarity (+, -) of E_{T}.${\text{ω}}_{\text{1}} {\text{= sgn (E}}_{\text{T}} {\text{)(|E|/φ}}_{\text{2}} {\text{) = sgn(E}}_{\text{T}} {\text{) [√(E}}_{\text{M}} {\text{}}^{\text{2}} {\text{+E}}_{\text{T}} {\text{}}^{\text{2}} {\text{)]/φ}}_{\text{2}}$

Fig. 2 is a vector diagram illustrating the relation among the voltage, the current and the magnetic flux of the induction motor. Since the M axis is directed along the direction of the secondary magnetic flux φ₂ by transvector control, the M axis induced voltage E_{M} usually becomes zero as equation 2 indicates:${\text{E}}_{\text{M}} \text{= 0}$

And, when equation 2 holds, equation 3 also holds.${\text{ω}}_{\text{1}} {\text{= E}}_{\text{T}} {\text{/φ}}_{\text{2}}$

Transvector control of an induction motor can be realized, without using data from a speed detector of the induction motor, by generating the phase angle command value θ* by integrating the primary angular frequency command value ω₁ * calculated from equation 1 or 3, and by obtaining a position of the magnetic flux.

Fig. 3 is a voltage vector diagram of the induction motor when the above described phase angle command value θ* deviates from the actual phase angle θ of the motor. The rotational coordinate system based on the phase angle command value θ* is expressed by the M-T coordinates, and the rotational coordinate system based on the actual phase angle θ is expressed by the M'-T' coordinates. Since the direction of the induced voltage vector E coincides with the direction of the T' axis, the M axis induced voltage E_{M} has a value corresponding to the error of the phase angle when θ* deviates from θ.

As Fig. 3 indicates, E_{M}>0 when θ* is in advance of e, and E_{M}<0 when θ* is in retard of θ. Therefore, by disposing the first regulating means to which E_{M} is input and by subtracting the output of the first regulating means from the primary angular frequency command value, the absolute value |ω₁ *| of the primary angular frequency command value is corrected so that E_{M} may be always zero.

By utilizing the fact that the sign of the primary angular frequency ω₁ and the T axis induced voltage E_{T} coincide with each other, the primary angular frequency command value ω₁ * is obtained by adding the sign of E_{T} to the absolute value of the primary angular frequency.

As a result of the correction described earlier which regulates E_{M} at zero, a phase angle of the motor fed to the magnetic flux position operating means coincides with the actual phase angle of the motor.

At that time, the primary angular frequency command value ω₁ * is calculated from equation 4. In equation 4, Gₑₘ is a transfer function of the first regulating means to which E_{M} is input.

The primary angular frequency operating means 200' of Fig. 16 according to the prior art uses the magnetic flux command value φ₂* in place of the actual secondary magnetic flux value φ₂ of equation 4 which can not be detected directly.${\text{ω}}_{\text{1}} {\text{* = sgn (E}}_{\text{T}} \text{)[(} \left|{\text{E}}_{\text{T}}\right| {\text{/φ}}_{\text{2}} {\text{) - G}}_{\text{em}} {\text{E}}_{\text{M}} \text{]}$

In the field weakening range in which the magnetic flux intensity becomes small, since the magnetizing current becomes relatively small with respect to the torque current and the phase angle of the magnetic flux tends to change, it is necessary to reduce the gain of the first regulating means for driving the motor stably and smoothly.

Based on this, the present invention realizes stable and smooth driving of the motor by reducing the gain of the first regulating means in the field weakening range by multiplying the output of the first regulating means by a variable F(x) which varies in response to the intensity of the magnetic flux. In practice, this correction is conducted by multiplying E_{M} in the correction term of equation 4 by the variable F(x). Then, ω₁ * is expressed by equation 5.${\text{ω}}_{\text{1}} {\text{* = sgn (E}}_{\text{T}} \text{)[(} \left|{\text{E}}_{\text{T}}\right| {\text{/φ}}_{\text{2}} {\text{) - G}}_{\text{em}} {\text{F(x)E}}_{\text{M}} \text{]}$

Since the induced voltage is small in the low speed driving range, a voltage detection error causes a relatively large error of the primary angular frequency command value ω₁ *.

Based on the fact that the speed of the motor is varied by the variation of the torque current or torque, the speed control apparatus preferably corrects the primary angular frequency command value ω₁ * at low speed by adding the output of the second regulating means, which regulates the torque current or the torque at the torque current command value or the torque command value, to the primary angular frequency command value. The error of ω₁ * is also reduced by the present invention, since the current value has more significant digits than the voltage value in the low speed range.

Thus, the present variable speed control apparatus realizes stable and smooth driving of the induction motor.

Though the variable speed control apparatus according to the prior art uses the magnetic flux command value φ₂* as an equivalent of the magnetic flux necessary for obtaining the primary angular frequency command value ω₁ *, an error is caused when the secondary magnetic flux of the motor varies greatly.

By setting E_{M}=0, and by modifying equation 1, equation 6 is obtained.${\text{φ}}_{\text{2}} \text{=} \left|{\text{E}}_{\text{T}} {\text{/ω}}_{\text{1}}\right|$

If equation 6 is used as it is for calculating the secondary magnetic flux φ₂, it is difficult to calculate the secondary magnetic flux φ₂, since both E_{T} and ω₁ are very small in the low speed driving range.

To avoid this, the variable speed control apparatus introduces a reference frequency value a of finite value and obtains the calculated magnetic flux value φ₂.${\text{φ}}_{\text{2}} {\text{= (αφ}}_{\text{2}} \text{*+} \left|{\text{E}}_{\text{T}}\right| \text{)/(α+} \left|{\text{ω}}_{\text{1}} \text{*}\right| \text{)}$

In the low speed range in which E_{T} is very small, when the primary angular frequency command value ω₁ * is sufficiently smaller than the reference frequency value α, φ₂ = φ₂* from equation 7, and when the primary angular frequency command value ω₁ * is sufficiently larger than the reference frequency value α, φ₂ = | E_{T}/ω₁ * |.

Thus, by using equation 7 in place of equation 6, the magnetic flux value is calculated with a small error over the entire speed range.

However, ω₁ * and φ₂ can not be calculated simultaneously, since equation 7 requires the primary angular frequency command value ω₁ * for calculating the calculated magnetic flux value φ₂, and since equation 5 requires the calculated magnetic flux value φ₂ for calculating the primary angular frequency command value ω₁ *. Though the primary angular frequency ω₁ instantaneously changes, the secondary magnetic flux φ₂ changes slowly at a speed determined by a secondary time constant of the motor. Based on this fact, the variable speed control apparatus solves the above described problem by providing a magnetic flux operating means, on its output side, with a low path filter as described later so that φ₂ may change slowly at a speed corresponding to the secondary time constant of the motor.

Thus, ω₁ * and φ₂ are calculated separately in time series with the above described arrangement which instantaneously calculates ω₁ * based on φ₂ which changes slowly.

Now the present invention will be described in detail hereinafter with reference to the drawings which illustrate preferred embodiments of the present invention only and in which:
- Fig. 1: is a block diagram of a variable speed control apparatus using the present invention;
- Fig. 2: is a vector diagram illustrating the relation among the voltage, the current and the magnetic flux of the induction motor;
- Fig. 3: is a vector diagram illustrating the components of the induced voltage etc.;
- Fig. 4: is a block diagram of the first invention embodiment of a primary angular frequency operating means of Fig. 1;
- Fig. 5: is a block diagram of the second invention embodiment of the primary angular frequency operating means of Fig. 1;
- Fig. 6: is a block diagram of the third invention embodiment of the primary angular frequency operating means of Fig. 1;
- Fig. 7: is a block diagram of the fourth invention embodiment of the primary angular frequency operating means of Fig. 1;
- Fig. 8: is a block diagram of the fifth invention embodiment of the primary angular frequency operating means of Fig. 1;
- Fig. 9: is a block diagram of the sixth invention embodiment of the primary angular frequency operating means of Fig. 1;
- Fig. 10: is a block diagram showing the correlation between the primary angular frequency operating means and the magnetic flux operating means of Fig. 1;
- Fig. 11: is a block diagram showing the first embodiment of the magnetic flux operating means of Fig. 1;
- Fig. 12: is a block diagram showing the second embodiment of the magnetic flux operating means of Fig. 1;
- Fig.13: is a block diagram showing the third embodiment of the magnetic flux operating means of Fig. 1;
- Fig. 14: is a block diagram showing the fourth embodiment of the magnetic flux operating means of Fig. 1;
- Fig. 15: is a block diagram of a variable speed control apparatus according to the prior art; and
- Fig. 16: is a block diagram of a primary angular frequency operating means according to the prior art.

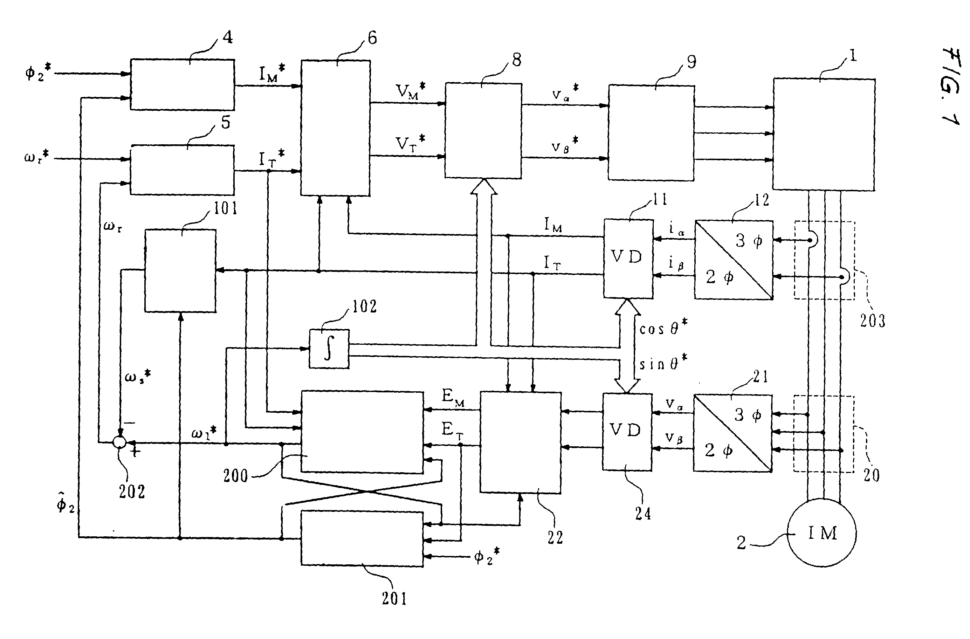

Fig. 1 is a block diagram of a variable speed control apparatus using the present invention. The basic structure of the variable speed control apparatus of Fig. 1 is common to all the embodiments using the present invention.

In Fig. 1, a primary current of a motor 2 is resolved in a three-phase/two-phase transformer 12 into two-phase current components i_{α}, i_{β} on the stator coordinate system, and is further transformed in a vector rotator 11 to an actual magnetizing current value l_{M} and an actual torque current value IT on the M-T coordinate system defined with respect to the axis of magnetic flux.

A magnetic flux regulator 4 generates a magnetizing current command value l_{M}* from a deviation between a magnetic flux command value φ₂* and a calculated magnetic flux φ₂. A speed regulator 5 generates a torque current command value I_{T}* from a speed command value ωᵣ* and the estimated speed value ωᵣ. A current regulator 6 obtains an M component V_{M}* and a T component V_{T}* of a primary voltage command value from the command values l_{M}*, l_{T}* and the actual values l_{M}, l_{T}.

The voltage command values V_{M}*, V_{T}* are transformed though a coordinate transforming circuit 8 to two-phase values V_{α}*, V_{β}* which are further converted in a pulse generating circuit 9 to drive pulses for driving a PWM inverter 1.

The estimated speed value ωᵣ described above is obtained by subtracting a slip frequency command value ω_{S}* from a primary angular frequency command value ω₁ *. A slip frequency operator 101 outputs the slip frequency command value ω_{S}* based on the actual torque current value I_{T} and the calculated magnetic flux φ₂. The calculated magnetic flux φ₂ is output from a magnetic flux operating means 201.

In Fig. 1, a voltage detector 20 and a three-phase/two-phase transformer 21, a vector rotator 24 and an induced voltage operating circuit 22 constitute a means for obtaining a induced voltage vector of the induction motor 2. Induced voltage operating circuit 22 constitutes a voltage component operating means for obtaining an M axis component E_{M} of the induced voltage vector E of the induction motor 2, and for obtaining a T axis components E_{T} perpendicular to E_{M}.

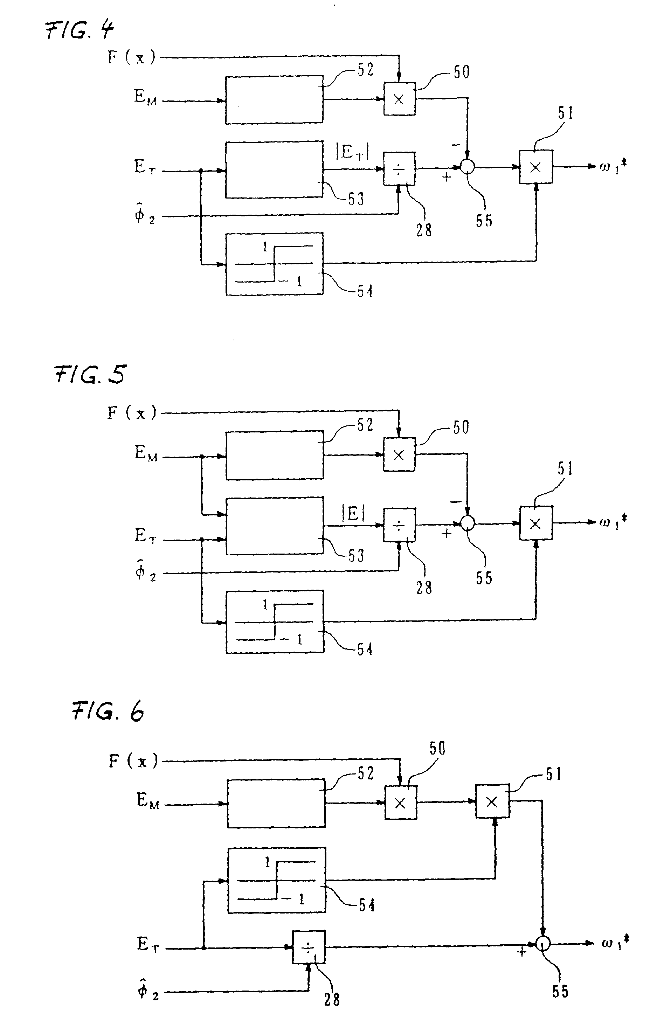

Fig. 4 is a block diagram of the first invention embodiment of a primary angular frequency operating means 200 of Fig. 1. The principle for obtaining the primary angular frequency command value is similar to that described in JP-A-64-8896.

In Fig. 4, an absolute value operating circuit 53 calculates the absolute value of the T axis induced voltage E_{T}. The absolute value of E_{T} is fed to a divider 28. The divider 28 divides the input absolute value of E_{T} by the calculated magnetic flux φ₂ according to equation 3, and outputs the absolute value | ω₁ | of the primary angular frequency.

As shown in Fig. 4, primary angular frequency operating means 200 is provided with a regulating means 52 (the first regulating means) to which E_{M} is input, and a multiplier 50 which multiplies the output of the regulating means 52 by a variable F(x) which changes in response to the intensity of the secondary magnetic flux. An adder 55 subtracts the output of the multiplier 50 from the absolute value of the primary angular frequency | ω₁ | output from the divider 28.

By this operation, the primary angular frequency is corrected so as to regulate E_{M} at zero based on the principle explained earlier. Since the gain of the regulating means 52 is adjusted by the multiplier 50 so as to be proportional to the variable F(x), stable and smooth driving of the induction motor 2 is facilitated.

The magnetic flux command value φ₂* or the magnetizing current command value l_{M}* which corresponds to the magnetic flux intensity may be used as the variable F(x).

Since the sign of the primary angular frequency coincides with the sign of the T axis induced voltage E_{T}, the primary angular frequency command value ω₁ * having the same polarity with the T axis induced voltage E_{T} is obtained by multiplying in a multiplier 51 the output of the adder 55 by the sign of E_{T} detected by a polarity detecting circuit 54.

By lowering the gain of the regulating means 52, stable and smooth driving of the induction motor 2 is facilitated in the field weakening range even when the magnetizing current value has less significant digits than the torque current and the phase angle of the magnetic flux trends to change.

Fig. 5 is a block diagram of the second invention embodiment of the primary angular frequency operating means 200 of Fig. 1. The primary angular frequency operating means of Fig. 5 is different from the first embodiment of Fig. 4 in that the M axis induced voltage E_{M} and the T axis induced voltage E_{T} are input to the absolute value operating circuit 53, and the circuit 53 outputs the absolute value of the induced voltage vector | E |(= √(E_{M}²+E_{T}²)).

In this embodiment, the primary angular frequency command value ω₁ * is calculated by equation 1.

Fig. 6 is a block diagram of the third invention embodiment of the primary angular frequency operating means 200 of Fig. 1. The primary angular frequency operating means of Fig. 6 is different from the first embodiment of Fig. 4 in that the T axis induced voltage E_{T} is input directly to the divider 28, and that the multiplier 51 is connected between the multiplier 50 and the adder 55. The multiplier 51 inputs the output of the multiplier 50 to the adder 55 after providing the output of the multiplier 50 with the sign of E_{T} detected by the polarity detecting circuit 54.

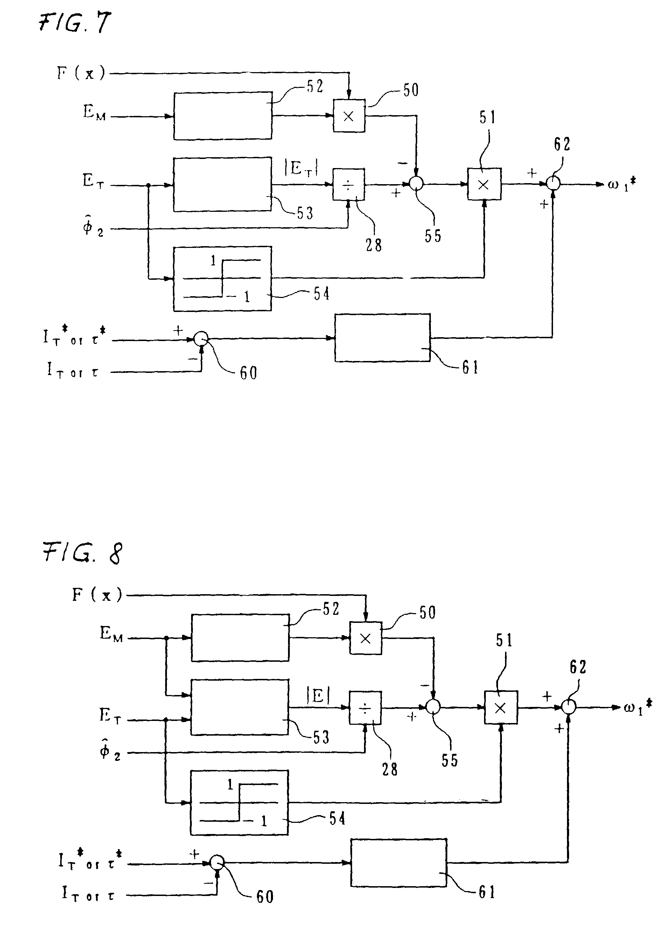

Fig. 7 is a block diagram of the fourth invention embodiment of the primary angular frequency operating means 200 of Fig. 1. The primary angular frequency operating means of Fig. 7 includes the arrangement of the first embodiment of Fig. 4 provided with an adder 62 which adds a frequency correction value to the primary angular frequency command value ω₁ *.

This frequency correction value is obtained by calculating a deviation by subtracting in an adder 60 the actual torque current value I_{T} or an actual torque value (or a calculated torque value) τ from the torque current command value l_{T}* or a torque command value τ*, and by conducting in a regulating means 61 (the second regulating means) proportional or proportional plus integral operation so as to regulate the deviation at zero.

This embodiment reduces the detection error or operational error and facilitates stable and smooth driving of the induction motor even in the low speed driving range in which the induced voltage becomes small, by correcting the primary angular frequency command value ω₁ * with the torque current value etc. which has more significant digits than the induced voltage.

Fig. 8 is a block diagram of the fifth invention embodiment of the primary angular frequency operating means 200 of Fig. 1. The primary angular frequency operating means of Fig. 8 includes the arrangement of the second embodiment of Fig. 5 provided with an adder 62 which adds a frequency correction value to the primary angular frequency command value ω₁ *.

The primary angular frequency is corrected in this embodiment in the same way as in the fourth embodiment of Fig. 7.

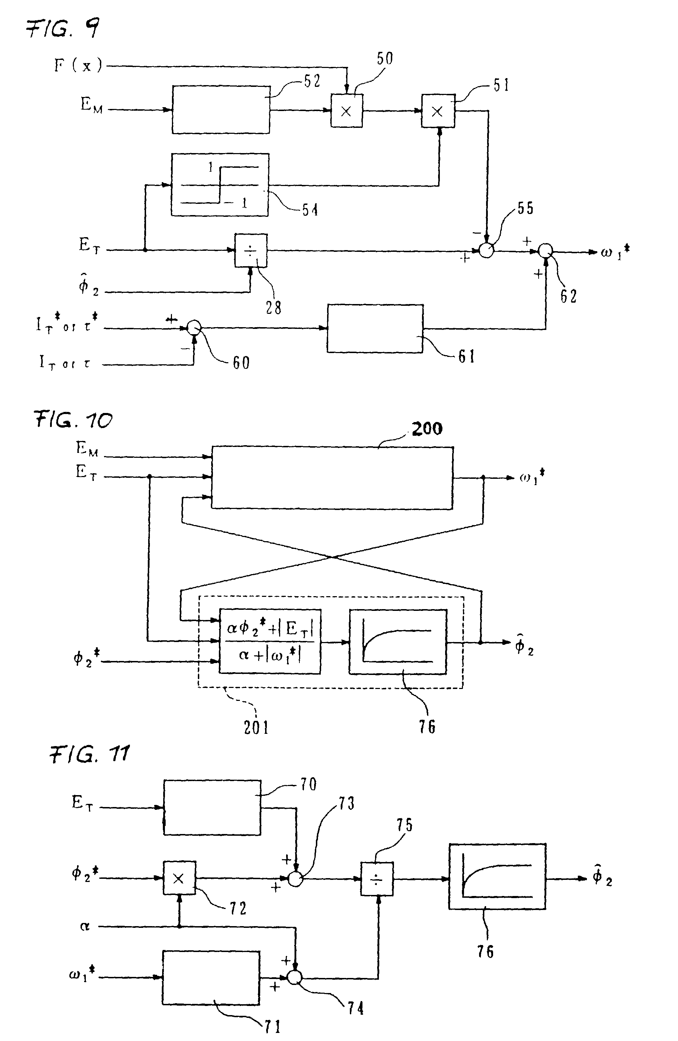

Fig. 9 is a block diagram of the sixth invention embodiment of the primary angular frequency operating means 200 of Fig. 1. The primary angular frequency operating means of Fig. 9 includes the arrangement of the third embodiment of Fig. 6 provided with an adder 62 which adds a frequency correction value to the primary angular frequency command value ω₁ *.

Also in this embodiment, the primary angular frequency is corrected in the same way as in the fourth embodiment of Fig. 7.

Fig. 10 is a block diagram showing the correlation between the primary angular frequency operating means 200 and the magnetic flux operating means 201.

The magnetic flux operating means 201 obtains the magnetic flux value φ₂ by calculating equation 7 using the input primary angular frequency command value ω₁ *, T axis induced voltage E_{T}, and magnetic flux command value φ₂*. The calculated magnetic flux value φ₂ is filtered through a low path filter 76 and is converted to the final calculated value of magnetic flux φ₂ which changes at the time constant of the induction motor. This final calculated magnetic flux value φ₂ is input to the primary angular frequency operating means 200 and used in the dividing operation in the divider 28 in all the above described embodiments.

Fig. 11 is a block diagram showing the first embodiment of the magnetic flux operating means 201.

In Fig. 11, an absolute value operating circuit 70 calculates the absolute value of the T axis induced voltage E_{T}, and a multiplier 72 multiplies the magnetic flux command value φ₂* by a reference frequency constant α. An adder 73 adds the output of the absolute value operating circuit 70 and the output of the multiplier 72.

An absolute value operating circuit 71 calculates the absolute value of the primary angular frequency command value ω₁ *, and an adder 74 adds the reference frequency constant α and the output of the absolute value operating circuit 71. A divider 75 divides the output of the adder 73 by the output of the adder 74. Finally the calculated magnetic flux value φ₂ is obtained by filtering the output of the divider 75 through a low path filter 76.

The calculated magnetic flux value φ₂ thus obtained is used as a magnetic flux equivalent in the above described embodiments of the primary angular frequency operating means.

This embodiment facilitates obtaining from equation 7 the calculated magnetic flux value φ₂ with a small error in either case whether the primary angular frequency command value ω₁ * is sufficiently smaller or larger than the reference frequency value α.

Since the calculated magnetic flux value φ₂ obtained through the low path filter 76 changes more slowly than the primary angular frequency command value ω₁ *, φ₂ and ω₁ * can be separately calculated in time series. Due to this, since φ₂ and ω₁ * can substantially be calculated simultaneously, equation 5 can be calculated with no troubles.

Fig. 12 is a block diagram showing the second embodiment of the magnetic flux operating means 201. This embodiment is different from the first embodiment of Fig. 11 in that the absolute value operating circuit 70 calculates the absolute value of the induced voltage vector E instead of the T axis induced voltage E_{T}. Explanation on the other arrangement, which is the same with the first embodiment of Fig. 11, will be omitted.

Fig. 13 is a block diagram showing the third embodiment of the magnetic flux operating means. In this embodiment, the magnetic flux command value φ₂* in the first embodiment of Fig. 11 is replaced with the magnetizing current command value l_{M}* filtered through a low path filter 77. Explanation on the other arrangement, which is the same with the first embodiment of Fig. 11, will be omitted.

Fig. 14 is a block diagram showing the fourth embodiment of the magnetic flux operating means. In this embodiment, the magnetic flux command value φ₂* in the second embodiment of Fig. 12 is replaced with the magnetizing current command value l_{M}* filtered through a low path filter 77. Explanation on the other arrangement, which is the same with the second embodiment of Fig. 12, will be omitted.

According to the present invention, stable and smooth driving of an induction motor is facilitated by lowering the gain of the first regulating means of the primary angular frequency operating means in the field weakening region in which the phase of the magnetic flux tends to vary.

As explained above, the output of the second regulating means which regulates the torque current or the torque at the command value is added to the output of the primary angular frequency operating means. By this measure, the primary angular frequency command value can be obtained with a small error by correcting the primary angular frequency value with the current value or the torque value which has more significant digits than the voltage value and is detectable more precisely even in the low speed driving range in which detected voltage is low and the operational error of the induced voltage becomes relatively large.

Since the magnetic flux is obtained on the basis of the induced voltage in the high or middle speed driving range of the motor and on the basis of the magnetic flux command value in the low speed driving range in which the induced voltage detection error becomes large, the magnetic flux value can be calculated accurately over the entire speed range of the motor. And, due to this, the primary angular frequency command value can also be calculated accurately.

## Claims

1. A variable speed control apparatus for an induction motor (2) comprising:
power converting means (1) capable of controlling magnitude, frequency and phase of the output voltage thereof, for supplying power to said induction motor;
magnetic flux position operating means (102) for establishing the position of magnetic flux for controlling a magnetizing current component (l_{M}) and a torque current component (l_{T}) independently, whereby to control at least the torque of said induction motor;
means (11, 12) responsive to said magnetic flux position operating means (102) for resolving a primary current of said induction motor into a magnetizing current component (l_{M}) and a torque current component (l_{T});
means (21, 22, 24) for obtaining an induced voltage vector (E) of said induction motor;
component operating means (22) responsive to said magnetic flux position operating means (102) for obtaining a magnetic flux axis component (E_{M}) and a torque axis component (ET) of said induced voltage vector based on said magnetic flux position (θ*); and
primary angular frequency operating means (200), including a first regulating means (52) for regulating said magnetic flux component (E_{M}) at zero thereby to correct a primary angular frequency (ω₁), obtained by dividing the absolute value of said torque axis component (E_{T}) of said induced voltage vector or the absolute value of said induced voltage vector (E) by a magnetic flux equivalent (φ₂) , with the output of said first regulating means (52) and for obtaining a primary angular frequency command value (ω₁∗) fed to said magnetic flux position operating means (102),
**characterized in that** said primary angular frequency operating means (200) further comprises means (50) for reducing the gain of said first regulating means (52) in a field weakening range.

2. The apparatus as claimed in claim 1, further comprising second regulating means (61) for regulating said torque current component (I_{T}) or said torque (T) at a command value (l_{T}*, τ*) thereof, and adding means (62) for adding the output of said second regulating means (61) to the output of said primary angular frequency operating means (200).

3. The apparatus as claimed in claim 1 or 2, further comprising a magnetic flux operating means (201) for obtaining a first value by adding a value, obtained by multiplying a magnetic flux command value (φ₂*) by a reference frequency value (α), and the absolute value ( | E | ; | E_{T} | ) of said induced voltage vector or its torque axis component, for obtaining a second value by adding said reference frequency value (α) and the absolute value ( | ω₁ * | ) of said primary angular frequency command value, and for dividing said first value by said second value, said magnetic flux operating means further comprising a low path filter means (76) for filtering the result of said division and for feeding said filtered result to said primary angular frequency operating means (200) as said magnetic flux equivalent.

## Patentansprüche

1. Vorrichtung zur Steuerung eines Induktionsmotors (2) mit variabler Drehzahl, umfassend:
eine Stromrichteranordnung (1), die in der Lage ist, die Größe, Frequenz und Phase ihrer Ausgangsspannung zu steuern und dazu dient, Leistung an den Induktionsmotor zu liefern,
eine Magnetflußpositions-Betriebseinrichtung (102) zur Ermittlung der Position des magnetischen Flusses zur unabhängigen Steuerung einer Magnetisierungsstrom-Komponente (l_{M}) und einer Drehmomentenstrom-Komponente (l_{T}), um dadurch zumindest das Drehmoment des Induktionsmotors zu steuern,
eine Einrichtung (11, 12), die dazu dient, ansprechend auf die Magnetflußpositions-Betriebseinrichtung (102), einen Primärstrom des Induktionsmotors in eine Magnetisierungsstromkomponente (l_{M}) und eine Drehmomentenstromkomponente (l_{T}) aufzulösen,
eine Einrichtung (21, 22, 24) zum Erhalt eines induzierten Spannungsvektors (E) des Induktionsmotors,
eine Komponenten-Betriebseinrichtung (22), die dazu dient, ansprechend auf die Magnetflußpositions-Betriebseinrichtung (102), eine Magnetflußachsen-Komponente (E_{M}) und eine Drehmomentenachsen-Komponente (E_{T}) des induzierten Spannungsvektors auf der Basis der Magnetflußposition (θ*) zu erhalten und
eine Primärwinkelfrequenz-Betriebseinrichtung (200) mit einer ersten Regeleinrichtung (52) zur Regelung der Magnetflußkomponente (E_{M}) auf Null, um dadurch eine primäre Winkelfrequenz (ω₁) zu korrigieren, die durch Teilen des Absolutwerts der Drehmomentachsen-Komponente (E_{T}) des induzierten Spannungsvektors oder des Absolutwerts des induzierten Spannungsvektors (E) durch ein Magnetflußäquivalent (φ₂) erhalten wird, durch das Ausgangssignal der ersten Regeleinrichtung (52) und zum Erhalt eines Primärwinkelfrequenz-Sollwerts (ω₁*), der der Magnetflußposition-Betriebseinrichtung (102) zugeführt wird,
**dadurch gekennzeichnet,** daß die Primärwinkelfrequenz-Betriebseinrichtung (200) ferner eine Einrichtung (50) zur Verringerung der Verstärkung der ersten Regeleinrichtung (52) in einem Feldschwächebereich umfaßt.

2. Vorrichtung nach Anspruch 1, ferner umfassend eine zweite Regeleinrichtung (61) zur Regelung der Drehmoment-Stromkomponente (l_{T}) oder des Drehmoments (τ) auf den jeweiligen Sollwert (l_{T}*, τ*), und eine Additionseinrichtung (62) zum Addieren des Ausgangssignals der zweiten Regeleinrichtung (61) zu dem Ausgangssignal der Primärwinkelfrequenz-Betriebseinrichtung (200).

3. Vorrichtung nach Anspruch 1 oder 2, ferner umfassend eine Magnetfluß-Betriebseinrichtung (201) zum Erhalt eines ersten Werts durch Addieren eines Werts, der durch Multiplizieren eines Magnetfluß-Sollwerts (φ₂*) mit einem Referenzfrequenzwert (α) erhalten wird, und des Absolutwerts (|E|; |E_{T}|) des induzierten Spannungsvektors oder seiner Drehmomentachsen-Komponente, zum Erhalt eines zweiten Werts durch Addieren des Referenzfrequenzwerts (α) und des Absolutwerts (|ω₁ *|) des Primärwinkelfrequenz-Sollwerts, und zum Teilen des ersten Werts durch den zweiten Wert, wobei die Magnetfluß-Betriebseinrichtung ferner eine Tiefpaßfilteranordnung (76) zur Filterung des Ergebnisses der Division und zur Zufuhr des gefilterten Ergebnisses zu der Primärwinkelfrequenz-Betriebseinrichtung (200) als das Magnetflußäquivalent umfaßt.

## Revendications

1. Dispositif de commande à vitesse variable pour un moteur à induction (2) comprenant :
un moyen de conversion d'alimentation électrique (1) pouvant en commander l'amplitude, la fréquence et la phase de tension de sortie, pour l'alimentation électrique dudit moteur à induction;
un moyen de commande de position de flux magnétique (102) pour établir la position du flux magnétique pour commander une composante de courant magnétisant (l_{M}) et une composante de courant de couple (l_{T}) indépendamment, pour commander ainsi au moins le couple dudit moteur à induction;
un moyen (11, 12) sensible audit moyen de commande de position de flux magnétique (102) pour décomposer un courant primaire dudit moteur à induction en une composante de courant magnétisant (l_{M}) et une composante de courant de couple (l_{T}),
un moyen (21, 22, 24) pour obtenir un vecteur de tension induite (E) dudit moteur à induction;
un moyen de commande de composante (22) sensible audit moyen de commande de position de flux magnétique (102) pour obtenir une composante d'axe de flux magnétique (E_{M}) et une composante d'axe de couple (E_{T}) dudit vecteur de tension induite en fonction de ladite position de flux magnétique (θ*); et
un moyen de commande de fréquence angulaire primaire (200), comprenant un premier moyen de régulation (52) pour réguler ladite composante de flux magnétique (E_{M}) à zéro pour corriger ainsi une fréquence angulaire primaire (ω₁), obtenue en divisant la valeur absolue de ladite composante d'axe de couple (E_{T}) dudit vecteur de tension induite ou la valeur absolue dudit vecteur de tension induite (E) par un équivalent de flux magnétique (φ₂), avec la sortie dudit premier moyen de régulation (52) et pour obtenir une valeur de commande de fréquence angulaire primaire (ω₁ *) transmise audit moyen de commande de position de flux magnétique (102),
caractérisé en ce que ledit moyen de commande de fréquence angulaire primaire (200) comprend plus loin un moyen (50) pour réduire le gain dudit premier moyen de régulation (52) dans une plage d'affaiblissement de champ.

2. Dispositif selon la revendication 1, comprenant en outre un deuxième moyen de régulation (61) pour réguler ladite composante de courant de couple (l_{T}) ou ledit couple (τ) à une valeur de commande (l_{T}*, τ*) de ceux-ci, et un moyen d'addition (62) pour ajouter la sortie dudit deuxième moyen de régulation (61) à la sortie dudit moyen de commande de fréquence angulaire primaire (200).

3. Dispositif selon la revendication 1 ou 2, comprenant en outre un moyen de commande de flux magnétique (201) pour obtenir une première valeur en ajoutant une valeur, obtenue en multipliant une valeur de commande de flux magnétique (φ₂*) par une valeur de fréquence de référence (α), et la valeur absolue (|E|; |E_{T}|) dudit vecteur de tension induite ou de sa composante d'axe de couple, pour obtenir une deuxième valeur en ajoutant ladite valeur de fréquence de référence (α) et la valeur absolue (|ω₁ *|) de ladite valeur de commande de fréquence angulaire primaire, et pour diviser ladite première valeur par ladite deuxième valeur, ledit moyen de commande de flux magnétique comprenant en outre un moyen de filtre passe-bas (76) pour filtrer le résultat de ladite division et pour transmettre ledit résultat filtré audit moyen de commande de fréquence angulaire primaire (200) comme ledit équivalent de flux magnétique.
